# EUROPÄISCHE PATENTSCHRIFT

(11) **EP 3 838 722 B1**
(45) Veröffentlichungstag und Bekanntmachung des Hinweises auf die Patenterteilung: **16.03.2022**
(21) Anmeldenummer: 19218436.4
(22) Anmeldetag: 20.12.2019
(51) Int. Cl.: B62D 27/02, B62D 21/11, B62D 29/00

(54) **HILFSRAHMEN FÜR EIN KRAFTFAHRZEUG**
SUBFRAME FOR A MOTOR VEHICLE
FAUX CHÂSSIS POUR UN VÉHICULE AUTOMOBILE

(43) Veröffentlichungstag der Anmeldung: 23.06.2021
(73) Patentinhaber: Autotech Engineering Deutschland GmbH, 33647 Bielefeld (DE)
(72) Erfinder: Tahir, Zidane, Durham, DH1 5AD (GB); Aso, Raymond, Bowburn, DH6 5FD (GB); Richford, Tom, Richmond, DL10 4 UB (GB)
(74) Vertreter: Cohausz & Florack

(56) Entgegenhaltungen:
- DE-A1-102009 020 305
- DE-A1-102014 108 838
- DE-A1-102016 201 815
- DE-B3-102014 101 979

## Beschreibung

Die Erfindung betrifft einen Hilfsrahmen für ein Kraftfahrzeug, aufweisend zumindest drei Träger, von denen sich im montierten Zustand des Hilfsrahmens zumindest zwei Träger beabstandet voneinander, im Wesentlichen entlang der Längsachse des Kraftfahrzeugs erstrecken und sich zumindest ein Träger quer zur Längsachse des Kraftfahrzeugs erstreckt, wobei zumindest einer der Träger ein extrudierter Träger ist, und zumindest einen Gussknoten aus Aluminium, Magnesium oder einer Legierung auf Basis von Aluminium und/oder Magnesium, wobei der Gussknoten den extrudierten Träger und zumindest einen der anderen Träger miteinander verbindet, wobei der Gussknoten ein armförmig ausgebildetes Träger-Anbindungselement aufweist, wobei der extrudierte Träger das Träger-Anbindungselement überlappt, und wobei der extrudierte Träger mit dem Träger-Anbindungselement durch eine Schweißnaht verbunden ist.

Hilfsrahmen für Kraftfahrzeuge, auch Achsträger genannt, sind in vielfältigen Ausführungen bekannt. Sie sollen bei hoher Festigkeit und Steifigkeit möglichst leicht sein und weisen üblicherweise Lenkeranbindungen (Lageraufnahmen) für Radführungselemente und andere Aggregate auf, um als Vormontageeinheit den Einbau kompletter Vorder- oder Hinterachsmodule mit Antriebseinheiten zu ermöglichen. Herkömmlicherweise werden Hilfsrahmen aus Längsträgern und Querträgern, welche aus Stahlwerkstoffen gefertigt sind, zusammengesetzt und aneinander geschweißt. Des Weiteren sind auch Hilfsrahmen bekannt, deren Längsträgern und Querträgern aus Aluminiumwerkstoffen gefertigt sind.

Unter dem Begriff "Längsträger" werden hier Tragelemente oder Abschnitte von Tragelementen des Hilfsrahmens verstanden, die sich im montierten Zustand des Hilfsrahmens im Wesentlichen entlang der Längsachse des betreffenden Kraftfahrzeugs und somit im Wesentlichen in Fahrtrichtung erstrecken, während unter "Querträgern" Tragelemente oder Abschnitte von Tragelementen des Hilfsrahmens verstanden werden, die sich im montierten Zustand des Hilfsrahmens quer zur Längsachse des Kraftfahrzeugs und somit quer zur Fahrtrichtung erstrecken.

Aus der DE 10 2016 201815 A1 ist ein Hilfsrahmen bekannt, der mehrere Gussknoten aufweist, die einen linken bzw. einen rechten Längsträger und einen Querträger miteinander verbinden. Die Gussknoten bestehen z. B. aus Aluminiumguss und weisen eine Längsträger-Anbindungsstelle und eine rohrförmig ausgestaltete Querträger-Anbindungsstelle auf. Der Querträger ist als Strangpressprofil oder offenes Profil ausgebildet. In den gezeigten Ausführungsbeispielen des bekannten Hilfsrahmens ist der Querträger mit der Querträger-Anbindungsstelle im Überlappstoß mittels Rührreibschweißen verschweißt. Der Längsträger ist dagegen mit der Längsträger-Anbindungsstelle mittels Schrauben verbunden oder alternativ ebenfalls mittels Rührreibschweißen verschweißt. Des Weiteren ist in der DE 10 2016 201 815 A1 angegeben, dass es auch denkbar sei, den Querträger und die Querträger-Anbindungsstelle mittels Schutzgasschweißen zu verbinden, wobei sich Kehlnaht-Verbindungen oder Lochschweißungen anbieten würden.

Davon ausgehend liegt der Erfindung die Aufgabe zugrunde, einen Hilfsrahmen der eingangs genannten Art im Hinblick auf eine hohe Festigkeit und Lebensdauer und ein geringes Gewicht des Hilfsrahmens weiter zu verbessern.

Diese Aufgabe wird durch einen Hilfsrahmen mit den in Anspruch 1 angegebenen Merkmalen gelöst. Vorteilhafte Ausgestaltungen des erfindungsgemäßen Hilfsrahmens sind in den Unteransprüchen angegeben.

Der erfindungsgemäße Hilfsrahmen ist dadurch gekennzeichnet, dass der Gussknoten an dem Träger-Anbindungselement einen Absatz aufweist, der eine Absatzstirnseite definiert, wobei die Absatzstirnseite einerseits und der extrudierte Träger und/oder die Schweißnaht am extrudierten Träger andererseits eine nut- oder grabenförmige Vertiefung begrenzen, deren Breite oder durchschnittliche Breite mindestens das 2,5-fache, vorzugsweise mindestens das 3,5-fache, besonders bevorzugt mindestens das 4-fache der Wanddicke des extrudierten Trägers beträgt, und wobei die Schweißnaht als Überlappnaht ausgeführt ist.

Die Erfindung basiert auf der Idee, bei guter Herstellbarkeit des Hilfsrahmens, durch Positionierung und Ausgestaltung der Schweißnaht, welche den extrudierten Quer-oder Längsträger mit dem Gussknoten verbindet, die Dauerfestigkeit und Lebensdauer des Hilfsrahmens zu verbessern und/oder das Gewicht des Hilfsrahmens zu reduzieren. Die Erfinder haben erkannt, dass sich dies durch die oben genannten kennzeichnenden Merkmale des erfindungsgemäßen Hilfsrahmens realisieren lässt. Insbesondere haben die Erfinder erkannt, dass beim Fahrbetrieb eines mit dem Hilfsrahmen ausgerüsteten Kraftfahrzeugs im Bereich der Schweißnaht auftretende Spannungen aufgrund der nut- oder grabenförmigen Vertiefung mit der angegebenen Mindestbreite relativ gering sind, und dass aufgrund der spannungsreduzierten Lage der Schweißnaht die Wandstärke des extrudierten Quer- oder Längsträger stark reduziert werden kann.

Die Obergrenze der (durchschnittlichen) Breite der nut- oder grabenförmigen Vertiefung kann beispielsweise das 20-fache, vorzugsweise das 15-fache, insbesondere das 10-fache der Wanddicke des extrudierten Trägers betragen.

Die Schweißnaht zur stoffschlüssigen Verbindung des extrudierten Quer- oder Längsträgers mit dem Gussknoten des erfindungsgemäßen Hilfsrahmens kann beispielsweise durch Schutzgasschweißen, insbesondere als MIG-Schweißen oder MAG-Schweißen, oder auch durch andere Schweißverfahren, wie etwa Laserschweißen, vorzugsweise mit Zusatzdraht, oder Laser-Lichtbogen-Hybridschweißen, ausgeführt werden.

Die nut- oder grabenförmige Vertiefung mit der oben angegebenen Mindestbreite bietet insbesondere den Vorteil, dass der Fügestoß (Fügekante des Überlappstoßes), an dem die Schweißverbindung des extrudierten Quer- oder Längsträgers mit dem Gussknoten hergestellt wird, besser zugänglich ist. Somit kann auch ein größerer Schweißkopf, insbesondere ein Schweißkopf zum Laser-Lichtbogen-Hybridschweißen, welches Vorteile im Hinblick auf die Dauerfestigkeit der Schweißnaht bietet, gut entlang des Fügestoßes bewegt werden.

Des Weiteren bietet die nut- oder grabenförmige Vertiefung mit der oben angegebenen Mindestbreite den Vorteil, dass die Dicke der Schweißnaht in Form einer Überlappnaht vergrößert werden kann, ohne dass es zu Schweißfehlern (z. B. Durchbrand oder übermäßigem Einbrand an der Schweißnaht, oder einem Schweißnahtversatz) kommt.

Eine vorteilhafte Ausgestaltung des erfindungsgemäßen Hilfsrahmens sieht vor, dass dieser zumindest vier Träger aufweist, von denen sich zumindest zwei Träger beabstandet voneinander, im Wesentlichen entlang der Längsachse des Kraftfahrzeugs erstrecken und sich zumindest zwei Träger beabstandet voneinander, quer zur Längsachse des Kraftfahrzeugs erstrecken, wobei die beiden sich im Wesentlichen entlang der Längsachse des Kraftfahrzeugs erstreckenden Träger und/oder die beiden sich quer zur Längsachse des Kraftfahrzeugs erstreckenden Träger entsprechend dem extrudierten Träger ausgeführt sind, wobei zumindest vier Gussknoten entsprechend dem besagten Gussknoten vorhanden sind, die zusammen mit den Trägern eine geschlossene Rahmenstruktur definieren, und wobei die extrudierten Träger mit den Gussknoten derart verbunden sind, dass sich an den zumindest vier Gussknoten jeweils zumindest eine der besagten nut- oder grabenförmigen Vertiefung entsprechende Vertiefung ergibt. Diese Ausgestaltung bietet den Vorteil, dass der Hilfsrahmen hohe dynamische Kräfte aufnehmen kann, und dies bei deutlich reduziertem Gewicht gegenüber herkömmlichen Hilfsrahmen mit geschlossener Rahmenstruktur.

Eine weitere vorteilhafte Ausgestaltung des Hilfsrahmens sieht vor, dass der jeweilige extrudierte Träger als geschlossenes Hohlprofil ausgeführt ist. Diese Ausgestaltung ermöglicht bei hoher Steifigkeit des Hilfsrahmens eine sehr weite Reduzierung des Gewichts des Hilfsrahmens.

Um eine besonders stabile Verbindung des Gussknotens und des extrudierten Trägers herstellen zu können, sieht eine weitere vorteilhafte Ausgestaltung der Erfindung vor, dass die Schweißnaht als umlaufende Überlappnaht ausgeführt ist.

Eine weitere vorteilhafte Ausgestaltung des Hilfsrahmens sieht vor, dass der jeweilige extrudierte Träger aus Aluminium, Magnesium oder einer Legierung auf Basis von Aluminium und/oder Magnesium hergestellt ist. Diese Ausgestaltung trägt ebenfalls zur Reduzierung des Gewichts des Hilfsrahmens bei.

Für eine Gewichtsreduzierung und eine gute Herstellbarkeit des Hilfsrahmens ist es insbesondere von Vorteil, wenn nach einer weiteren Ausgestaltung der Erfindung das jeweilige Träger-Anbindungselement in Form eines Rohrstutzens ausgeführt ist. Das rohrstutzenförmige Träger-Anbindungselement weist vorzugsweise einen zylindrischen Steckabschnitt auf, der in den extrudierten Träger passgenau eingreift. Diese Steckverbindung ist vorzugsweise so ausgeführt, dass ein Axialabschnitt des extrudierten Trägers zunächst relativ zu dem Steckabschnitt des Träger-Anbindungselement axial verschiebbar und erforderlichenfalls zum Ausgleich von Fertigungstoleranzen justierbar ist, bis anschließend die stoffschlüssige Verbindung durch Herstellen der Schweißnaht (Überlappnaht) ausgeführt wird. Der zylindrische Steckabschnitt kann beispielsweise ein ovales, elliptisches, kreisrundes, ringförmiges oder mehrere Kurvenabschnitte aufweisendes Querschnitthohlprofil haben, wobei der extrudierte Träger jeweils ein dazu passendes Querschnitthohlprofil besitzt.

Nach einer weiteren vorteilhaften Ausgestaltung der Erfindung weist das Träger-Anbindungselement des Gussknotens im Bereich der nut- oder grabenförmigen Vertiefung eine Wanddicke auf, die gleich der Wanddicke oder größer als die Wanddicke des extrudierten Trägers, z. B. Längsträgers ist. Diese Ausgestaltung wirkt sich sehr positiv auf die Qualität der Schweißnaht aus. Denn die relativ große Wanddicke des Träger-Anbindungselements im Bereich der nut- oder grabenförmigen Vertiefung bietet den Vorteil, dass die Dicke bzw. Querschnittsfläche der Überlappnaht vergrößert werden kann, ohne dass es zu Schweißfehlern der oben genannten Art kommt.

Der Gussknoten wird beispielsweise im Niederdruckgussverfahren hergestellt, worauf anschließend zumindest im Bereich des Träger-Anbindungselements eine Oberflächenbearbeitung, beispielsweise eine spanabhebende oder maschinelle Bearbeitung durchgeführt wird. Die minimale Wanddicke des Gussknotens im Bereich des Träger-Anbindungselements beträgt beispielsweise ca. 4,5 mm nach der Oberflächenbearbeitung.

Vorzugsweise weist das Träger-Anbindungselement im Bereich der nut- oder grabenförmigen Vertiefung eine Wanddicke auf, die zwischen dem 1,2-fachen und dem 3-fachen, vorzugsweise zwischen dem 1,5-fachen und dem 2,5-fachen der Wanddicke des extrudierten Trägers liegt. Diese Ausgestaltung wirkt sich besonders positiv auf die Qualität der Schweißnaht aus.

Eine weitere vorteilhafte Ausgestaltung des erfindungsgemäßen Hilfsrahmens sieht vor, dass das jeweilige Träger-Anbindungselement einen ersten im Wesentlichen axialen Gussknotenabschnitt und einen zweiten im Wesentlichen axialen Gussknotenabschnitt aufweist, wobei der zweite axiale Gussknotenabschnitt mit dem extrudierten Träger verschweißt ist und ein geringeres Außenmaß, vorzugsweise einen geringeren Außendurchmesser aufweist als der erste axiale Gussknotenabschnitt, und wobei das Außenmaß oder der Außendurchmesser des ersten axialen Gussknotenabschnitts größer als oder gleich dem Produkt aus dem Außenmaß oder Außendurchmesser des zweiten axialen Gussknotenabschnitts und dem 1,3-fachen der Wanddicke des extrudierten Träger ist. Versuche der Erfinder haben ergeben, dass sich mit dieser Ausgestaltung der Erfindung sowohl eine besonders hohe Gewichtsreduzierung als auch eine besonders hohe Lebensdauer des Hilfsrahmens erzielen lassen. Besonders vorteilhaft ist dabei eine Ausgestaltung, bei welcher das Außenmaß oder der Außendurchmesser des ersten axialen Gussknotenabschnitts größer als oder gleich dem Außenmaß oder Außendurchmesser des extrudierten Trägers ist.

Eine weitere vorteilhafte Ausgestaltung des Hilfsrahmens sieht vor, dass das jeweilige Träger-Anbindungselement an dem dem extrudierten Träger abgewandten Ende des ersten axialen Gussknotenabschnitts innenseitig eine Verengung, vorzugsweise eine umlaufende Verengung aufweist. Hierdurch wird bei vergleichsweise geringem Gesamtgewicht die Stabilität, insbesondere die Biegefestigkeit des Gussknotens verbessert.

Nach einer weiteren vorteilhaften Ausgestaltung des erfindungsgemäßen Hilfsrahmens überlappt der extrudierte Träger das Träger-Anbindungselement mit einem axialen Maß, welches kleiner als oder gleich der Breite oder durchschnittlichen Breite der nut- oder grabenförmigen Vertiefung ist. Diese Ausgestaltung ermöglicht einen Ausgleich von axialen Längentoleranzen des Gussknotens, insbesondere des Träger-Anbindungselements, und des extrudierten Trägers und ist zudem hinsichtlich der Gewichtsreduzierung des Hilfsrahmens von Vorteil.

Eine weitere vorteilhafte Ausgestaltung des Hilfsrahmens sieht vor, dass der jeweilige extrudierte Träger in seiner Profilwand eine oder mehrere Durchgangsöffnungen aufweist, die beabstandet von dem Träger-Anbindungselement angeordnet sind und in bestimmungsgemäßer Einbaulage des Hilfsrahmens nach unten münden. Die Durchgangsöffnungen ermöglichen einen Abfluss von in den extrudierten Träger eingedrungener Flüssigkeit. Zudem reduzieren die Durchgangsöffnungen das Gewicht des extrudierten Trägers und damit des Hilfsrahmens.

Nachfolgend wird die Erfindung anhand einer ein Ausführungsbeispiel darstellenden Zeichnung näher erläutert. Es zeigen:
- Fig. 1: einen erfindungsgemäßen Hilfsrahmen für ein Kraftfahrzeug, in einer perspektivischen Darstellung,
- Fig. 2: einen Längsträgerabschnitt des Hilfsrahmens aus Fig. 1 mit teilweise dargestellten Gussknoten, in einer perspektivischen Darstellung,
- Fig. 3: den Längsträgerabschnitt aus Fig. 2 mit den teilweise dargestellten Gussknoten, in einer perspektivischen Vertikalschnittansicht,
- Fig. 4: einen im Vergleich zu Fig. 3 vergrößert dargestellten Abschnitt eines der Gussknoten mit einem Abschnitt des Längsträgers, wiederum in einer perspektivischen Vertikalschnittansicht, und
- Fig. 5: einen Abschnitt eines der Gussknoten mit einem Abschnitt eines der extrudierten Träger, beispielsweise Längsträgers, in einer schematischen Vertikalschnittdarstellung.

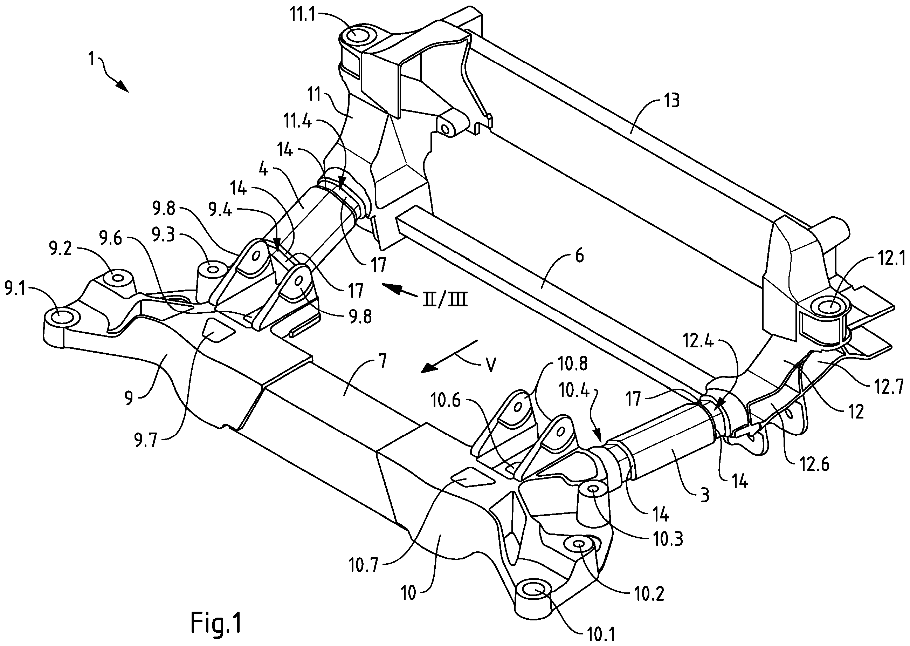

Fig. 1 zeigt ein Ausführungsbeispiel des erfindungsgemäßen Hilfsrahmens 1, der zwei gegenüberliegende, sich im Wesentlichen entlang der Längsachse eines Kraftfahrzeugs und damit in Fahrtrichtung V erstreckende Träger 3, 4, auch Längsträger genannt, und zwei gegenüberliegende, sich quer zur Längsachse des Kraftfahrzeugs erstreckende Träger 6, 7, auch Querträger genannt, aufweist. Die Träger 3, 4, 6, 7 sind über Gussknoten 9, 10, 11, 12 miteinander verbunden, wobei die Gussknoten 9,10,11,12 zusammen mit den Trägern 3, 4, 6, 7 eine geschlossene Rahmenstruktur definieren. Mit dem Bezugszeichen 13 ist ein weiterer optionaler Querträger bezeichnet, der an den in Fahrtrichtung V hinteren Gussknoten 11, 12 angebunden ist.

Die Gussknoten 9,10,11,12 sind mit buchsenartigen Anbindungselementen 9.1, 10.1, 11.1,12.1 versehen, die der Aufnahme von Schrauben dienen, so dass der Hilfsrahmen 1 durch Schraubverbindungen an einer Fahrzeugkarosserie montiert werden kann.

Die in Fahrtrichtung V vorne liegenden Gussknoten 9, 10 weisen zudem buchsenartige Anbindungselemente 9.2, 9.3, 10.2, 10.3 zur Anbindung von Radführungselementen (nicht gezeigt), auch Fahrwerks- oder Querlenker genannt, und ferner Halterungen 9.8 10.8 zur Anbindung eines Motors oder sonstigen Antriebsaggregats auf.

Die Gussknoten 9, 10, 11, 12 sind aus Aluminium, Magnesium oder einer Legierung auf Basis von Aluminium und/oder Magnesium gegossen. Des Weiteren sind in dem in Fig. 1 gezeigten Ausführungsbeispiel zumindest die Längsträger 3, 4 als extrudierte Träger in Form von Strangpressprofilen aus Aluminium, Magnesium oder einer Legierung auf Basis von Aluminium und/oder Magnesium hergestellt. Vorzugsweise sind auch die Querträger 6, 7 als Strangpressprofile aus einem entsprechenden Leichtmetall bzw. einer entsprechenden Leichtmetalllegierung hergestellt.

Sowohl die vorderen Gussknoten 9, 10 als auch die hinteren Gussknoten 11, 12 haben armförmig ausgebildete Träger-Anbindungselemente 9.4,10.4,11.4, 12.4, auf welche die extrudierten Träger, in diesem Ausführungsbeispiel die Längsträger 3, 4, aufgesteckt sind, so dass das jeweilige Ende des Längsträgers 3, 4 das zugeordnete Träger-Anbindungselement 9.4, 10.4, 11.4, 12.4 überlappt. Die Träger-Anbindungselemente 9.4, 10.4, 11.4, 12.4 sind in Form von Rohrstutzen ausgeführt. Zur dauerhaften Fixierung der Längsträger 3, 4 an den zugeordneten Gussknoten 9, 10, 11, 12 ist der jeweilige Längsträger 3, 4 mit dem Träger-Anbindungselement 9.4, 10.4,11.4,12.4 des jeweiligen Gussknoten 9, 10 11, 12 durch eine Schweißnaht in Form einer Überlappnaht 14 verschweißt.

Der Gussknoten 9,10,11, 12 hat an dem Träger-Anbindungselement 9.4,10.4,11.4, 12.4 einen Absatz, der eine Absatzstirnseite 16 definiert. Das Stirnende des extrudierten Längsträgers 3, 4 ist auf dem Träger-Anbindungselement 9.4,10.4, 11.4, 12.4 derart positioniert, dass die Absatzstirnseite 16 einerseits und der Längsträger 3, 4 und/oder die Schweißnaht (Überlappnaht) 14 am Stirnende des Längsträgers 3, 4 andererseits eine nut- oder grabenförmige Vertiefung 17 begrenzen, deren Breite oder durchschnittliche Breite W mindestens das 2,5-fache, vorzugsweise mindestens das 3,5-fache, besonders bevorzugt mindestens das 4-fache der Wanddicke te des extrudierten Trägers beträgt. Die durchschnittliche Breite oder Breite W kann auch als axialer Versatz des Stirnendes des Längsträgers 3, 4 relativ zu der Absatzstirnseite 16 des Träger-Anbindungselements 9.4, 10.4, 11.4, 12.4 bezeichnet werden. Der Längsträger 3, 4 überlappt das Träger-Anbindungselement 9.4, 10.4, 11.4, 12.4 mit einem axialen Maß lₒ, welches kleiner als oder gleich der Breite oder durchschnittlichen Breite W der nut- oder grabenförmigen Vertiefung 17 ist.

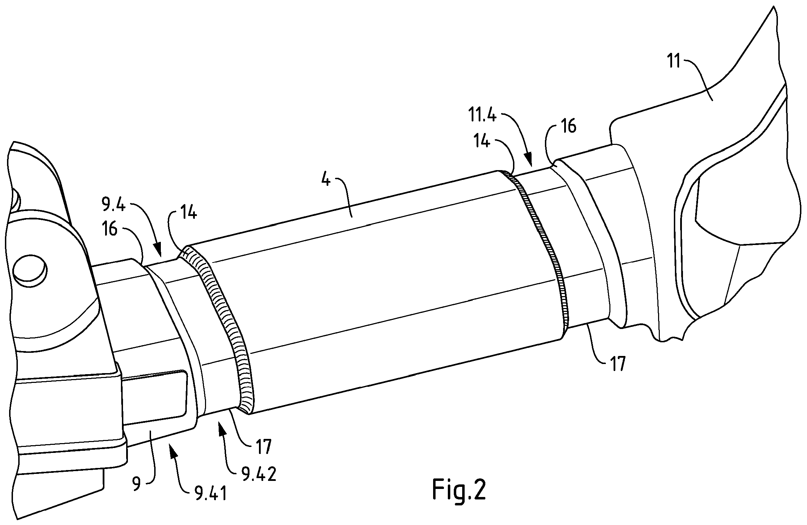

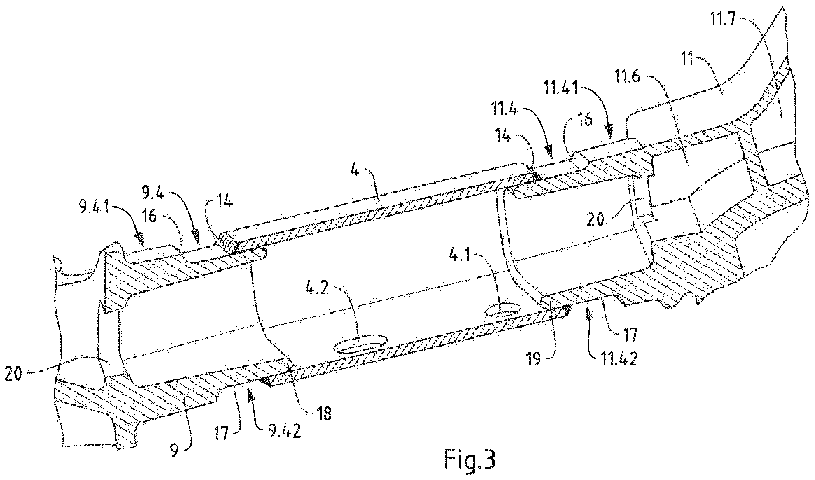

Die Längsträger 3, 4 und/oder die Querträger 6, 7 sind vorzugsweise als geschlossene Hohlprofile ausgeführt. Die Längsträger 3, 4 weisen beispielsweise ein geschlossenes Querschnittprofil auf, welches sich aus im Wesentlichen geraden und gebogenen Profilabschnitten zusammensetzt (vgl. Figuren 2 und 3). Die Schweißnaht 14 ist dabei vorzugsweise als umlaufende Überlappnaht ausgeführt. Der in das jeweilige Ende des Längsträgers 3, 4 eingesteckte Abschnitt 18, 19 des Träger-Anbindungselements 9.4, 10.4, 11.4, 12.4 hat im Wesentlichen die gleiche Querschnittprofilform wie der Längsträger 3, 4, allerdings mit einem Außenmaß bzw. Außendurchmesser d1, welches/welcher geringfügig kleiner ist als das Innenmaß bzw. der Innendurchmesser d3 des extrudierten Längsträgers 3, 4. Alternativ kann der extrudierte Längsträger 3, 4 auch ein anderes geschlossenes Querschnittprofil, beispielsweise ein im Wesentlichen kreisrundes, ovales oder elliptisches Hohlprofil, oder auch ein offenes Querschnittprofil, beispielsweise ein U-förmiges, V-förmiges oder C-förmiges Querschnittprofil aufweisen. Der in Fahrtrichtung V vordere Querträger 7 ist beispielsweise als rechteckiges Hohlprofil ausgeführt, während der hintere Querträger 6 beispielsweise als im Wesentlichen ovales oder polygonales Hohlprofil ausgeführt ist.

Die vorderen Gussknoten 9, 10 und auch die hinteren Gussknoten 11, 12 weisen jeweils mehrere Aussparungen 9.6, 9.7, 10.6, 10.7 und/oder Kammern 11.6, 11.7, 12.6, 12.7 auf. Diese verleihen dem jeweiligen Gussknoten 9, 10, 11, 12 bei relativ geringem Gewicht eine hohe Steifigkeit, insbesondere Biegesteifigkeit.

Die Träger-Anbindungselemente 9.4 und 11.4 der Gussknoten 9 und 11 haben im Bereich der nut- oder grabenförmigen Vertiefung 17 jeweils eine Wanddicke tc, die vorzugsweise gleich der Wanddicke te oder dicker als die Wanddicke te des extrudierten Längsträgers 4 ist. Beispielsweise hat das Träger-Anbindungselement 9.4 oder 11.4 im Bereich der nut- oder grabenförmigen Vertiefung 17 eine Wanddicke tc, die bevorzugt zwischen dem 1,2-fachen und dem 3-fachen, besonders bevorzugt zwischen dem 1,5-fachen und dem 2,5-fachen der Wanddicke te des extrudierten Trägers 4 liegt.

Die minimale Wanddicke tc im Bereich des Träger-Anbindungselements 9.4 beträgt beispielsweise ca. 4,5 mm.

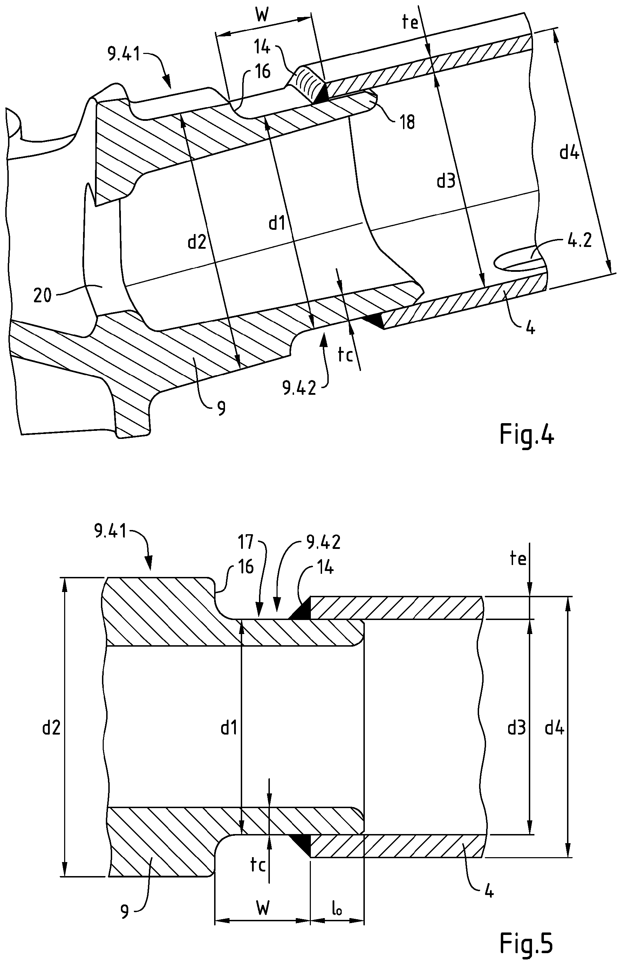

Insbesondere die Figuren 3 bis 5 zeigen, dass das jeweilige Träger-Anbindungselement 9.4, 11.4 einen ersten im Wesentlichen axialen Gussknotenabschnitt 9.41, 11.41 und einen zweiten im Wesentlichen axialen Gussknotenabschnitt 9.42, 11.42 aufweist, wobei der zweite axiale Gussknotenabschnitt 9.42, 11.42 mit dem extrudierten Längsträger 4 verschweißt ist und ein geringeres Außenmaß, beispielsweise einen geringeren Außendurchmesser d1 hat als der erste axiale Gussknotenabschnitt 9.41, 11.41. Das Außenmaß oder der Außendurchmesser d2 des ersten axialen Gussknotenabschnitts 9.41, 11.41 ist dabei beispielsweise größer als oder gleich dem Produkt aus dem Außenmaß oder Außendurchmesser d1 des zweiten axialen Gussknotenabschnitts 9.42, 11.42 und dem 1,3-fachen der Wanddicke te des extrudierten Längsträgers 4 ist. Vorzugsweise ist dabei das Außenmaß oder der Außendurchmesser d2 des ersten axialen Gussknotenabschnitts 9.41, 11.41 größer als oder gleich dem Außenmaß oder Außendurchmesser d4 des extrudierten Längsträger 4 (vgl. Figuren 4 und 5).

Der Gussknoten 11 ist so ausgestaltet, dass das Träger-Anbindungselement 11.4 an dem Ende des ersten axialen Gussknotenabschnitts 11.41, welches Ende dem Längsträger 4 abgewandt ist, innenseitig eine Verengung 20 aufweist. Die Verengung 20 kann dabei als innenseitige Bodenwulst oder als umlaufende Verengung (innenseitige Rippe) ausgestaltet sein. Der vordere Gussknoten 9 weist eine ähnliche Verengung 20 auf.

Ferner ist in den Figuren 3 und 4 gezeigt, dass der Längsträger 4 in seiner Profilwand mehrere Durchgangsöffnungen 4.1, 4.2 aufweist, die mit Abstand von dem Träger-Anbindungselement 9.4, 11.4 angeordnet sind und in bestimmungsgemäßer Einbaulage des Hilfsrahmens 1 nach unten münden.

Die Ausführung der Erfindung ist nicht auf das in der Zeichnung dargestellte Ausführungsbeispiel beschränkt. Vielmehr sind zahlreiche Varianten denkbar, die auch bei von dem gezeigten Beispiel abweichenden Ausführungen von der in den Ansprüchen angegebenen Erfindung Gebrauch machen. So kann beispielsweise auch mindestens einer der Querträger 6, 7 als extrudierter Träger, vorzugsweise Hohlprofilträger ausgeführt und mit den zugeordneten Gussknoten 9, 10, 11, 12 derart verbunden sein, dass an dem dem Querträger 6, 7 zugeordneten Träger-Anbindungselement des Gussknotens 9, 10, 11, 12 ein Absatz ausgebildet ist, der eine Absatzstirnseite 16 definiert, wobei die Absatzstirnseite 16 einerseits und der extrudierte Querträger 6, 7 und/oder die Überlappnaht 14 am extrudierten Querträger 6, 7 andererseits eine nut- oder grabenförmige Vertiefung 17 begrenzen, deren Breite oder durchschnittliche Breite mindestens das 2,5-fache, vorzugsweise mindestens das 3,5-fache, besonders bevorzugt mindestens das 4-fach der Wanddicke te des extrudierten Querträgers 6, 7 beträgt.

## Patentansprüche

1. Hilfsrahmen (1) für ein Kraftfahrzeug, aufweisend
- zumindest drei Träger (3, 4, 6, 7), von denen sich im montierten Zustand des Hilfsrahmens (1) zumindest zwei Träger (3, 4) beabstandet voneinander, im Wesentlichen entlang der Längsachse des Kraftfahrzeugs erstrecken und sich zumindest ein Träger (6, 7) quer zur Längsachse des Kraftfahrzeugs erstreckt, wobei zumindest einer der Träger (3, 4, 6, 7) ein extrudierter Träger (3, 4) ist, und
- zumindest einen Gussknoten (9, 10, 11, 12) aus Aluminium, Magnesium oder einer Legierung auf Basis von Aluminium und/oder Magnesium,
wobei der Gussknoten (9, 10, 11, 12) den extrudierten Träger (3, 4) und zumindest einen der anderen Träger (6, 7) miteinander verbindet,
wobei der Gussknoten (9, 10, 11, 12) ein armförmig ausgebildetes Träger-Anbindungselement (9.4, 10.4, 11.4, 12.4) aufweist,
wobei der extrudierte Träger (3, 4) das Träger-Anbindungselement (9.4, 10.4, 11.4, 12.4) überlappt, und
wobei der extrudierte Träger (3, 4) mit dem Träger-Anbindungselement (9.4, 10.4, 11.4, 12.4) durch eine Schweißnaht (14) verbunden ist,
**dadurch gekennzeichnet, dass** der Gussknoten (9, 10, 11, 12) an dem Träger-Anbindungselement (9.4, 10.4, 11.4, 12.4) einen Absatz aufweist, der eine Absatzstirnseite (16) definiert, wobei die Absatzstirnseite (16) einerseits und der extrudierte Träger (3, 4) und/oder die Schweißnaht (14) am extrudierten Träger (3, 4) andererseits eine nut- oder grabenförmige Vertiefung (17) begrenzen, deren Breite oder durchschnittliche Breite (W) mindestens das 2,5-fache, vorzugsweise mindestens das 3,5-fache, besonders bevorzugt mindestens das 4-fache der Wanddicke (te) des extrudierten Trägers (3, 4) beträgt, und wobei die Schweißnaht (14) als Überlappnaht ausgeführt ist.

2. Hilfsrahmen nach Anspruch 1, **gekennzeichnet durch** zumindest vier Träger (3, 4, 6, 7), von denen sich zumindest zwei Träger (3, 4) beabstandet voneinander, im Wesentlichen entlang der Längsachse des Kraftfahrzeugs erstrecken und sich zumindest zwei Träger (6, 7) beabstandet voneinander, quer zur Längsachse des Kraftfahrzeugs erstrecken, wobei die beiden sich im Wesentlichen entlang der Längsachse des Kraftfahrzeugs erstreckenden Träger (3, 4) und/oder die beiden sich quer zur Längsachse des Kraftfahrzeugs erstreckenden Träger (6, 7) entsprechend dem extrudierten Träger ausgeführt sind, wobei zumindest vier Gussknoten (9, 10, 11, 12) entsprechend dem besagten Gussknoten vorhanden sind, die zusammen mit den Trägern (3, 4, 6, 7) eine geschlossene Rahmenstruktur definieren, und wobei die extrudierten Träger mit den Gussknoten derart verbunden sind, dass sich an den zumindest vier Gussknoten (9, 10, 11, 12) jeweils zumindest eine der besagten nut- oder grabenförmigen Vertiefung (17) entsprechende Vertiefung ergibt.

3. Hilfsrahmen nach Anspruch 1 oder 2, **dadurch gekennzeichnet, dass** der jeweilige extrudierte Träger (3, 4, 6, 7) als geschlossenes Hohlprofil ausgeführt ist.

4. Hilfsrahmen nach einem der Ansprüche 1 bis 3, **dadurch gekennzeichnet, dass** die Schweißnaht (14) als umlaufende Überlappnaht ausgeführt ist.

5. Hilfsrahmen nach einem der Ansprüche 1 bis 4, **dadurch gekennzeichnet, dass** der jeweilige extrudierte Träger (3, 4, 6, 7) aus Aluminium, Magnesium oder einer Legierung auf Basis von Aluminium und/oder Magnesium hergestellt ist.

6. Hilfsrahmen nach einem der Ansprüche 1 bis 5, **dadurch gekennzeichnet, dass** das jeweilige Träger-Anbindungselement (9.4, 10.4, 11.4, 12.4) in Form eines Rohrstutzens ausgeführt ist.

7. Hilfsrahmen nach einem der Ansprüche 1 bis 6, **dadurch gekennzeichnet, dass** das Träger-Anbindungselement (9.4, 10.4, 11.4, 12.4) im Bereich der nut- oder grabenförmigen Vertiefung (17) eine Wanddicke (tc) aufweist, die gleich der Wanddicke (te) oder größer als die Wanddicke (te) des extrudierten Trägers (3, 4) ist.

8. Hilfsrahmen nach einem der Ansprüche 1 bis 7, **dadurch gekennzeichnet, dass** das Träger-Anbindungselement (9.4, 10.4, 11.4, 12.4) im Bereich der nut- oder grabenförmigen Vertiefung (17) eine Wanddicke (tc) aufweist, die zwischen dem 1,2-fachen und dem 3-fachen, vorzugsweise zwischen dem 1,5-fachen und dem 2,5-fachen der Wanddicke (te) des extrudierten Trägers (3, 4) liegt.

9. Hilfsrahmen nach einem der Ansprüche 1 bis 8, **dadurch gekennzeichnet, dass** das jeweilige Träger-Anbindungselement (9.4) einen ersten im Wesentlichen axialen Gussknotenabschnitt (9.41) und einen zweiten im Wesentlichen axialen Gussknotenabschnitt (9.42) aufweist, wobei der zweite axiale Gussknotenabschnitt (9.42) mit dem extrudierten Träger (4) verschweißt ist und ein geringeres Außenmaß, vorzugsweise einen geringeren Außendurchmesser (d1) aufweist als der erste axiale Gussknotenabschnitt, und wobei das Außenmaß oder der Außendurchmesser (d2) des ersten axialen Gussknotenabschnitts (9.41) größer als oder gleich dem Produkt aus dem Außenmaß oder Außendurchmesser (d1) des zweiten axialen Gussknotenabschnittes und dem 1,3-fachen der Wanddicke (te) des extrudierten Träger (4) ist.

10. Hilfsrahmen nach Anspruch 9, **dadurch gekennzeichnet, dass** das Außenmaß oder der Außendurchmesser (d2) des ersten axialen Gussknotenabschnitts (9.41) größer als oder gleich dem Außenmaß oder Außendurchmesser (d4) des extrudierten Träger (4) ist.

11. Hilfsrahmen nach Anspruch 9 oder 10, **dadurch gekennzeichnet, dass** das jeweilige Träger-Anbindungselement (9.4) an dem dem extrudierten Träger (4) abgewandten Ende des ersten axialen Gussknotenabschnitts (9.41) innenseitig eine Verengung (20), vorzugsweise eine umlaufende Verengung aufweist.

12. Hilfsrahmen nach einem der Ansprüche 1 bis 11, **dadurch gekennzeichnet, dass** der extrudierte Träger (4) das Träger-Anbindungselement (9.4) mit einem axialen Maß (lₒ) überlappt, welches kleiner als oder gleich der Breite oder durchschnittlichen Breite (W) der nut- oder grabenförmigen Vertiefung (17) ist.

13. Hilfsrahmen nach einem der Ansprüche 1 bis 12, **dadurch gekennzeichnet, dass** der jeweilige extrudierte Träger (4) in seiner Profilwand eine oder mehrere Durchgangsöffnungen (4.1, 4.2) aufweist, die beabstandet von dem Träger-Anbindungselement (9.4, 11.4) angeordnet sind und in bestimmungsgemäßer Einbaulage des Hilfsrahmens (1) nach unten münden.

## Claims

1. Subframe (1) for a motor vehicle, comprising
- at least three beams (3, 4, 6, 7), of which, in the assembled state of the subframe (1), at least two beams (3, 4) extend at a distance from one another, substantially along the longitudinal axis of the motor vehicle and at least one beam (6, 7) extends transversely to the longitudinal axis of the motor vehicle, at least one of the beams (3, 4, 6, 7) being an extruded beam (3, 4), and
- at least one cast node (9, 10, 11, 12) of aluminium, magnesium or an alloy based on aluminium and/or magnesium,
the cast node (9, 10, 11, 12) connecting the extruded beam (3, 4) and at least one of the other beams (6, 7) to another,
wherein the cast node (9, 10, 11, 12) has an arm-shaped beam connecting element (9.4, 10.4, 11.4, 12.4),
wherein the extruded beam (3, 4) overlaps the beam connecting element (9.4, 10.4, 11.4, 12.4), and
wherein the extruded beam (3, 4) is connected to the beam connecting element (9.4, 10.4, 11.4, 12.4) by a weld seam (14),
**characterised in that** the cast node (9, 10, 11, 12) has on the beam connecting element (9.4, 10.4,11.4, 12. 4) a shoulder which defines a shoulder end face (16), wherein the shoulder end face (16) on the one hand and the extruded support (3, 4) and/or the weld seam (14) on the extruded beam (3, 4) on the other hand define a groove-shaped or trench-shaped recess (17), whose width or average width (W) is at least 2.5 times, preferably at least 3.5 times, particularly preferably at least 4 times, the wall thickness (te) of the extruded beam (3, 4), and wherein the weld seam (14) is designed as a lap welded joint.

2. Subframe according to claim 1, **characterised by** at least four beams (3, 4, 6, 7), of which at least two beams (3, 4) extend at a distance from one another, substantially along the longitudinal axis of the motor vehicle and at least two beams (6, 7) extend at a distance from one another, transversely to the longitudinal axis of the motor vehicle, the two beams (3, 4) extending substantially along the longitudinal axis of the motor vehicle and/or the two beams (6, 7) extending transversely to the longitudinal axis of the motor vehicle are designed in accordance with the extruded beam, wherein at least four cast nodes (9, 10, 11, 12) corresponding to said cast node are present which, together with the beams (3, 4, 6, 7), define a closed frame structure, and wherein the extruded beams are connected to the cast nodes in such a way that at least one recess corresponding to said groove-shaped or trench-shaped recess (17) is formed at each of the at least four cast nodes (9, 10, 11, 12).

3. Subframe according to claim 1 or 2, **characterised in that** the respective extruded beam (3, 4, 6, 7) is designed as a closed hollow profile.

4. Subframe according to any one of claims 1 to 3, **characterised in that** the weld seam (14) is designed as a circumferential lap welded joint.

5. Subframe according to any one of claims 1 to 4, **characterised in that** the respective extruded beam (3, 4, 6, 7) is made of aluminium, magnesium or an alloy based on aluminium and/or magnesium.

6. Subframe according to any one of the claims 1 to 5, **characterised in that** the respective beam connecting element (9.4, 10.4, 11.4, 12.4) is designed in the form of a pipe socket.

7. Subframe according to any one of claims 1 to 6, **characterised in that** the beam connecting element (9.4,10.4,11.4, 12.4) has a wall thickness (tc) in the region of the groove-shaped or trench-shaped recess (17) which is equal to the wall thickness (te) or greater than the wall thickness (te) of the extruded beam (3, 4).

8. Subframe according to any one of claims 1 to 7, **characterised in that** the beam connecting element (9.4, 10.4, 11.4, 12.4) has a wall thickness (tc) in the region of the groove-shaped or trench-shaped recess (17) which is between 1.2 times and 3 times, preferably between 1.5 times and 2.5 times, the wall thickness (te) of the extruded beam (3,4).

9. Subframe according to any one of claims 1 to 8, **characterized in that** the respective beam connecting element (9.4) comprises a first substantially axial cast node portion (9.41) and a second substantially axial cast node portion (9.42), said second axial cast node portion (9. 42) is welded to the extruded beam (4) and has a smaller outer dimension, preferably a smaller outer diameter (d1) than the first axial cast node portion, and wherein the outer dimension or outer diameter (d2) of the first axial cast node portion (9.41) is greater than or equal to the product of the outer dimension or outer diameter (d1) of the second axial cast node portion and 1.3 times the wall thickness (te) of the extruded beam (4).

10. Subframe according to claim 9, **characterised in that** the outer dimension or outer diameter (d2) of the first axial cast node section (9.41) is greater than or equal to the outer dimension or outer diameter (d4) of the extruded beam (4).

11. Subframe according to claim 9 or 10, **characterised in that** the respective beam connecting element (9.4) has a constriction (20), preferably a circumferential constriction, on the inside at the end of the first axial cast node section (9.41) facing away from the extruded beam (4).

12. Subframe according to any one of claims 1 to 11, **characterised in that** the extruded beam (4) overlaps the beam connecting element (9.4) with an axial dimension (l₀) which is smaller than or equal to the width or average width (W) of the groove-shaped or trench-shaped recess (17).

13. Subframe according to any one of claims 1 to 12, **characterised in that** the respective extruded beam (4) has one or more through openings (4.1, 4.2) in its profile wall, which are arranged at a distance from the beam connecting element (9.4, 11.4) and open downwards in the intended installation position of the subframe (1).

## Revendications

1. Faux-châssis (1) pour un véhicule automobile présentant
- au moins trois supports (3, 4, 6, 7) dont, à l'état monté du faux-châssis (1), au moins deux supports (3, 4) sont espacés l'un de l'autre, s'étendent essentiellement le long de l'axe longitudinal du véhicule automobile et au moins un support (6, 7) s'étend transversalement à l'axe longitudinal du véhicule automobile, dans lequel au moins l'un des supports (3, 4, 6, 7) est un support extrudé (3, 4), et
- au moins un nœud de coulée (9, 10, 11, 12) en aluminium, en magnésium ou en alliage à base d'aluminium et / ou magnésium,
dans lequel le nœud de coulée (9, 10, 11, 12) relie ensemble le support extrudé (3, 4) et au moins l'un des autres supports (6, 7),
dans lequel le nœud de coulée (9, 10, 11, 12) présente un élément de raccordement de support (9.4, 10.4, 11.4, 12.4) conçu en forme de bras,
dans lequel le support extrudé (3, 4) recouvre l'élément de raccordement de support (9.4, 10.4, 11.4, 12.4), et
dans lequel le support extrudé (3, 4) est relié à l'élément de raccordement de support (9.4, 10.4, 11.4, 12.4) par un cordon de soudure (14),
**caractérisé en ce que** le nœud de coulée (9, 10, 11, 12) présente, au niveau de l'élément de raccordement de support (9.4, 10.4, 11.4, 12.4), un gradin qui définit une face frontale de gradin (16), dans lequel la face frontale de gradin (16), d'une part, et le support extrudé (3, 4) et / ou le cordon de soudure (14) sur le support extrudé (3, 4), d'autre part, délimitent une cavité en forme de rainure ou de fossé (17), dont la largeur ou largeur moyenne (W) s'élève au moins à 2,5 fois, de préférence au moins 3,5 fois, de préférence encore au moins à 4 fois l'épaisseur de paroi (te) du support extrudé (3, 4), et dans lequel le cordon de soudure (14) est réalisé comme un cordon de recouvrement.

2. Faux-châssis selon la revendication 1, **caractérisé par** au moins quatre supports (3, 4, 6, 7), dont au moins deux supports (3, 4) sont espacés l'un de l'autre, s'étendent essentiellement le long de l'axe longitudinal du véhicule automobile et au moins deux supports (6, 7) s'étendent en étant espacés l'un de l'autre, transversalement à l'axe longitudinal du véhicule automobile, dans lequel les deux supports (3, 4) s'étendant essentiellement le long de l'axe longitudinal du véhicule automobile et / ou les deux supports (6, 7) s'étendant transversalement à l'axe longitudinal du véhicule automobile sont réalisés en correspondant au support extrudé, dans lequel au moins quatre nœuds de coulée (9, 10, 11, 12) sont présents en correspondant au dit nœud de coulée, qui définissent avec les supports (3, 4, 6, 7) une structure de cadre fermée, et dans lequel les supports extrudés sont reliés aux nœuds de coulée de sorte qu'il en résulte, sur les au moins quatre nœuds de coulée (9, 10, 11, 12), à chaque fois au moins une cavité correspondant à ladite cavité en forme de rainure ou de fossé (17).

3. Faux-châssis selon la revendication 1 ou 2, **caractérisé en ce que** le support extrudé respectif (3, 4, 6, 7) est réalisé comme un profil creux fermé.

4. Faux-châssis selon l'une des revendications 1 à 3, **caractérisé en ce que** le cordon de soudure (14) est réalisé comme un cordon de recouvrement périphérique.

5. Faux-châssis selon l'une des revendications 1 à 4, **caractérisé en ce que** le support extrudé respectif (3, 4, 6, 7) est fabriqué en aluminium, en magnésium ou en alliage à base d'aluminium et / ou de magnésium.

6. Faux-châssis selon l'une des revendications 1 à 5, **caractérisé en ce que** l'élément de raccordement de support respectif (9.4, 10.4, 11.4, 12.4) est réalisé en forme de tubulure.

7. Faux-châssis selon l'une des revendications 1 à 6, **caractérisé en ce que** l'élément de raccordement de support (9.4, 10.4, 11.4, 12.4) présente, dans la zone de la cavité en forme de rainure ou de fossé (17), une épaisseur de paroi (tc) qui est égale à l'épaisseur de paroi (te) ou supérieure à l'épaisseur de paroi (te) du support extrudé (3, 4).

8. Faux-châssis selon l'une des revendications 1 à 7, **caractérisé en ce que** l'élément de raccordement de support (9.4, 10.4, 11.4, 12.4) présente, dans la zone de la cavité en forme de rainure ou de fossé (17), une épaisseur de paroi (tc) qui se situe entre 1,2 fois et 3 fois, de préférence, entre 1,5 fois et 2,5 fois l'épaisseur de paroi (te) du support extrudé (3, 4).

9. Faux-châssis selon l'une des revendications 1 à 8, **caractérisé en ce que** l'élément de raccordement de support respectif (9.4) présente une première section de nœud de coulée essentiellement axiale (9.41) et une deuxième section de nœud de coulée essentiellement axiale (9.42), dans lequel la deuxième section de nœud de coulée axiale (9.42) est soudée au support extrudé (4) et présente une dimension externe moindre, de préférence un diamètre externe (d1) moindre que la première section de nœud de coulée axiale, et dans lequel la dimension externe ou le diamètre externe (d2) de la première section de nœud de coulée axiale (9.41) est supérieure ou égale au produit de la dimension externe ou du diamètre externe (d1) de la deuxième section de nœud de coulée axiale et de 1,3 fois l'épaisseur de paroi (te) du support extrudé (4).

10. Faux-châssis selon la revendication 9, **caractérisé en ce que** la dimension externe ou le diamètre externe (d2) de la première section de nœud de coulée axiale (9.41) est supérieure ou égale à la dimension externe ou diamètre externe (d4) du support extrudé (4).

11. Faux-châssis selon la revendication 9 ou 10, **caractérisé en ce que** l'élément de raccordement de support respectif (9.4) présente à l'extrémité, opposée au support extrudé (4), de la première section de nœud de coulée axiale (9.41) du côté interne un rétrécissement (20), de préférence, un rétrécissement périphérique.

12. Faux-châssis selon l'une des revendications 1 à 11, **caractérisé en ce que** le support extrudé (4) recouvre l'élément de raccordement de support (9.4) avec une dimension axiale (lo) qui est inférieure ou égale à la largeur ou largeur moyenne (W) de la cavité en forme de rainure ou de fossé (17).

13. Faux-châssis selon l'une des revendications 1 à 12, **caractérisé en ce que** le support extrudé respectif (4) présente dans sa paroi profilée une ou plusieurs ouvertures de passage (4.1, 4.2) qui sont disposées à une certaine distance de l'élément de raccordement de support (9.4, 11.4) et débouchent vers le bas dans une position de montage en conformité avec sa spécification du faux-châssis (1).
